(19) Europäisches Patentamt
European Patent Office
Office européen des brevets

(11) **EP 4 300 360 A1**

(12) **EUROPÄISCHE PATENTANMELDUNG**

(43) Veröffentlichungstag:
03.01.2024  Patentblatt 2024/01

(21) Anmeldenummer: 22182235.6

(22) Anmeldetag: **30.06.2022**

(51) Internationale Patentklassifikation (IPC):
**G06N 3/04** *(2023.01)*    **G06F 21/14** *(2013.01)*
**G06F 21/55** *(2013.01)*    G05B 9/02 *(2006.01)*
G05B 13/02 *(2006.01)*    G05B 19/406 *(2006.01)*

(52) Gemeinsame Patentklassifikation (CPC):
**G06N 3/04; G06F 21/14; G06F 21/552;** G05B 9/02;
G05B 13/027; G05B 19/406; G05B 2219/34456;
G06N 20/00

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Tokic, Michel
88069 Tettnang (DE)**
• **von Beuningen, Anja
99085 Erfurt (DE)**
• **Scharinger, Boris
90762 Fürth (DE)**

(74) Vertreter: **Siemens Patent Attorneys
Postfach 22 16 34
80506 München (DE)**

(54) **VERFAHREN ZUR DIEBSTAHLERKENNUNG VON MASCHINENLERNMODULEN SOWIE DIEBSTAHLMELDESYSTEM**

(57) Zum Erkennen eines Diebstahls eines anhand von Trainingsdaten (TD) für ein Steuern einer Maschine (M) trainierten oder zu trainierenden Maschinenlernmoduls (NN) werden beim Steuern der Maschine (M) vom Maschinenlernmodul (NN) ausgegebene erste Ausgabesignale (AS1) erfasst. Alternativ oder zusätzlich werden aus den Trainingsdaten abgeleitete vom Maschinenlernmodul (NN) zu reproduzierende erste Ausgabesignale (AS1) erfasst. Erfindungsgemäß wird eine erste statistische Verteilung (ASH1) der erfassten ersten Ausgabesignale (AS1) ermittelt und in einem Prüfmodul (CK) gespeichert. Das Maschinenlernmodul (NN) wird dann um das Prüfmodul (CK) erweitert, und das erweiterte Maschinenlernmodul (NN) wird zur Benutzung bereitgestellt. In das bereitgestellte Maschinenlernmodul (NN) wird eine Vielzahl von Eingabesignalen (BS2, SS) eingespeist. Durch das Prüfmodul (CK) wird dann eine zweite statistische Verteilung (ASH2) von durch das bereitgestellte Maschinenlernmodul (NN) aus den Eingabesignalen (BS2, SS) abgeleiteten, zweiten Ausgabesignalen (AS2) ermittelt, und es wird eine Abweichung (D) zwischen der ersten statistischen Verteilung (ASH1) und der zweiten statistischen Verteilung (ASH2) ermittelt. Schließlich wird abhängig von der ermittelten Abweichung (D) ein Alarmsignal (A) ausgegeben.

FIG 2

**Beschreibung**

Komplexe Maschinen, wie z.B. Roboter, Motoren, Fertigungsanlagen, Werkzeugmaschinen, Gasturbinen, Windturbinen, Energieversorgungseinrichtungen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz als Steuermodell darauf trainiert werden, eine Maschine in optimierter Weise zu steuern.

Ein Training von neuronalen Netzen oder anderen Maschinenlernmodulen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte Maschinenlernmodule oder eine darin enthaltene Trainingsinformation gegen eine unkontrollierte oder unberechtigte Verbreitung oder Verwendung zu schützen und/oder Diebstähle zu erkennen.

Es ist bekannt, zur Diebstahlerkennung von neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt. Derartige Verfahren bieten allerdings nur wenig Schutz gegen eine sogenannte Modellextraktion, bei der ein ggf. markiertes neuronales Netz dazu verwendet wird, ein neues Maschinenlernmodul darauf zu trainieren, sich ähnlich wie das neuronale Netz zu verhalten. Ein neuronalen Gewichten aufgeprägtes Wasserzeichen ist hierbei im neu trainierten Maschinenlernmodul in der Regel nicht mehr sicher nachweisbar.

Im Internet-Dokument https://www.internet-sicherheit.de/research/cybersicherheit-und-kuenstlicheintelligenz/model-extraction-attack.html (abgerufen am 20. Juni 2022) werden mehrere Verfahren zum Schutz vor Modellextraktion sowie deren Probleme diskutiert.

Es ist Aufgabe der vorliegenden Erfindung, ein Verfahren zur Diebstahlerkennung eines Maschinenlernmoduls sowie ein entsprechendes Diebstahlmeldesystem anzugeben, die einen besseren Schutz vor Modelextraktion bieten.

Gelöst wird diese Aufgabe durch ein Verfahren mit den Merkmalen des Patentanspruchs 1, durch ein Diebstahlmeldesystem mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruches 12.

Zum Erkennen eines Diebstahls eines anhand von Trainingsdaten für ein Steuern einer Maschine trainierten oder zu trainierenden Maschinenlernmoduls werden beim Steuern der Maschine vom Maschinenlernmodul ausgegebene erste Ausgabesignale erfasst. Alternativ oder zusätzlich werden aus den Trainingsdaten abgeleitete vom Maschinenlernmodul zu reproduzierende erste Ausgabesignale erfasst. Erfindungsgemäß wird eine erste statistische Verteilung der erfassten ersten Ausgabesignale ermittelt und in einem Prüfmodul gespeichert. Das Maschinenlernmodul wird um das Prüfmodul erweitert, und das erweiterte Maschinenlernmodul wird zur Benutzung bereitgestellt. In das bereitgestellte Maschinenlernmodul wird eine Vielzahl von Eingabesignalen eingespeist. Durch das Prüfmodul wird dann eine zweite statistische Verteilung von durch das bereitgestellte Maschinenlernmodul aus den Eingabesignalen abgeleiteten, zweiten Ausgabesignalen ermittelt, und es wird eine Abweichung zwischen der ersten statistischen Verteilung und der zweiten statistischen Verteilung ermittelt. Schließlich wird abhängig von der ermittelten Abweichung ein Alarmsignal ausgegeben. Die Ausgabe des Alarmsignals kann insbesondere dadurch ausgelöst werden, dass die Abweichung einen vorgegebenen Schwellwert überschreitet.

Zur Durchführung des erfindungsgemäßen Verfahrens sind ein Diebstahlmeldesystem, ein Computerprogrammprodukt sowie ein computerlesbares, vorzugsweise nichtflüchtiges Speichermedium vorgesehen.

Das erfindungsgemäße Verfahren sowie das erfindungsgemäße Diebstahlmeldesystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Die Erfindung bietet in vielen Fällen einen effizienten und verhältnismäßig sicheren Schutz von Maschinenlernmodulen gegen eine unberechtigte Modellextraktion. Das Verfahren basiert unter anderem auf der Beobachtung, dass beim Versuch einer Modellextraktion das nachzubildende Maschinenlernmodul in der Regel systematisch und/oder zufallsbasiert abgetastet wird. Eine solche Abtastung induziert aber in der Regel Ausgabesignale, die eine andere statistische Verteilung aufweisen als im realen Betrieb oder beim Training des Maschinenlernmoduls auftretende Ausgabesignale. Damit kann eine Abweichung der statistischen Verteilung von Ausgabesignalen als Hinweis auf eine Modellextraktion gewertet werden.

Weiterhin ist die Erfindung flexibel anwendbar und insbesondere nicht auf künstliche neuronale Netze beschränkt. Darüber hinaus können auch fertig trainierte Maschinenlernmodule, insbesondere auch von Drittanbietern trainierte Maschinenlernmodule gegen unkontrollierte Verbreitung geschützt werden. Ein aufwendiges Neutraining ist hierzu in der Regel nicht erforderlich.

Vorteilhafte Ausführungsformen und Weiterbildungen der Erfindung sind in den abhängigen Ansprüchen angegeben.

Gemäß einer vorteilhaften Ausführungsform der Erfindung kann durch das Prüfmodul abhängig von der ermittelten Abweichung eine Funktion des bereitgestellten Maschinenlernmoduls eingeschränkt, unterdrückt oder freigeschaltet werden. Insbesondere kann die Abweichung zu diesem Zweck mit einem vorgegebenen Schwellwert verglichen werden. Bei Überschreitung des Schwellwerts kann dann die Funktion eingeschränkt oder unterdrückt werden. Komplementär dazu kann bei Unterschreiten des Schwellwerts die Funktion freigeschaltet werden. Auf diese Weise kann eine unkontrollierte Verbreitung von Funktionen von Maschinenlernmodulen in vielen Fällen zumindest eingeschränkt werden.

Gemäß einer vorteilhaften Weiterbildung der Erfindung kann abhängig von der ermittelten Abweichung die erste statistische Verteilung anhand der zweiten statistischen Verteilung aktualisiert werden. Eine Aktualisierung kann insbesondere dann ausgelöst werden, wenn die Abweichung einen vorgegebenen Schwellwert unterschreitet. Auf diese Weise kann die erste statistische Verteilung insbesondere im regulären Betrieb des Maschinenlernmoduls sukzessive verbessert werden.

Nach einer weiteren vorteilhaften Ausführungsform der Erfindung können die erste statistische Verteilung durch ein erstes Ausgabesignal-Histogramm und die zweite statistische Verteilung durch ein zweites Ausgabesignal-Histogramm dargestellt werden. Als Abweichung zwischen der ersten und der zweiten statistischen Verteilung kann dann eine Abweichung zwischen dem ersten und dem zweiten Ausgabesignal-Histogramm ermittelt werden. Zum Ermitteln der Ausgabesignal-Histogramme können die Ausgabesignale des Maschinenlernmoduls in Klassen oder Bereiche eingeteilt werden. Falls das Maschinenlernmodul als Klassifikator fungiert, können zu diesem Zweck vorzugsweise die vom Klassifikator zu unterscheidenden Klassen bzw. Bereiche gewählt werden. Die Ausgabesignal-Histogramme können dann gebildet werden, indem jeweils eine Anzahl von in eine jeweilige Klasse bzw. in einen jeweiligen Bereich fallenden Ausgabesignalen ermittelt wird. Vorzugsweise können die Ausgabesignal-Histogramme normiert werden, indem die ermittelten Anzahlen jeweils durch eine Gesamtanzahl von Ausgabesignalen dividiert werden. Ein jeweiliges Ausgabesignal-Histogramm kann insbesondere durch einen Vektor dargestellt werden, dessen Vektorelemente den zu unterscheidenden Klassen bzw. Bereichen zugeordnet sind. Als Abweichung zwischen verschiedenen Ausgabesignal-Histogrammen kann dann z.B. ein euklidischer Abstand der darstellenden Vektoren ermittelt werden.

Gemäß einer weiteren vorteilhaften Weiterbildung der Erfindung kann eine Unsicherheit eines jeweiligen ersten Ausgabesignals erfasst werden. Darauf basierend kann eine dritte statistische Verteilung der erfassten Unsicherheiten ermittelt und im Prüfmodul gespeichert werden. Entsprechend kann durch das Prüfmodul eine vierte statistische Verteilung von jeweiligen Unsicherheiten der zweiten Ausgabesignale ermittelt werden, und das Alarmsignal kann abhängig von einer Abweichung zwischen der dritten statistischen Verteilung und der vierten statistischen Verteilung ausgegeben werden. Die dritte und die vierte statistische Verteilung können dabei analog zur ersten und zweiten statistischen Verteilung jeweils als Ausgabesignal-Histogramme dargestellt und verarbeitet werden.

Eine Unsicherheit eines Ausgabesignals eines Maschinenlernmoduls wird fachsprachlich häufig auch als Unbestimmtheit oder Uncertainty bezeichnet. Im dazu komplementären Sinne ist der Begriff der Konfidenz eines Ausgabesignals gebräuchlich. Ein Ausgabesignal eines Maschinenlernmoduls ist insbesondere dann unsicher, wenn das Ausgabesignal volatil ist, wenn wesentlich unterschiedliche Ausgabesignale bei nur leichter Variation der Eingabesignale ausgegeben werden und/oder wenn mehrere Ausgabesignale parallel ausgegeben werden, die mehrere einander eigentlich ausschließende Ausgabeklassen repräsentieren. Der letztgenannte Fall tritt beispielsweise bei einem als Klassifikator fungierenden Maschinenlernmodul auf, wenn ein zu klassifizierendes Eingabesignal nicht eindeutig klassifiziert werden kann. Dies kann sich z.B. darin äußern, dass mehrere klassenspezifische Ausgabeneuronen eines neuronalen Netzes parallel aktiviert werden. Zur Quantifizierung einer solchen Unsicherheit stehen mehrere etablierte Methoden zur Verfügung.

Nach einer vorteilhaften Ausführungsform kann das Maschinenlernmodul ein künstliches neuronales Netz umfassen, bei dem eine jeweilige Aktivierungsstärke eines jeweiligen Ausgabeneurons des künstlichen neuronalen Netzes erfasst wird. Die Unsicherheit eines jeweiligen ersten oder zweiten Ausgabesignals kann dann anhand der erfassten Aktivierungsstärken ermittelt werden. Eine gegenüber den anderen Ausgabeneuronen vergleichsweise hohe Aktivierungsstäke eines Ausgabeneurons deutet auf eine hohe Konfidenz des von diesem Ausgabeneuron ausgegebenen Ausgabesignals und damit auf eine geringe Unsicherheit hin. Wenn die Menge der Aktivierungsstärken dagegen kein ausgeprägtes Maximum oder mehrere Aktivierungsstärken gleicher Größenordnung aufweist, liegt in der Regel eine geringe Konfidenz bzw. eine hohe Unsicherheit vor. Somit kann als vorteilhaftes Maß für die Konfidenz eines jeweiligen Ausgabesignals insbesondere ein Abstand zwischen einer höchsten und einer zweithöchsten Aktivierungsstärke verwendet werden. Komplementär dazu kann der negative Wert der Konfidenz als Maß für die Unsicherheit genutzt werden.

Gemäß einer weiteren Ausführungsform kann das Maschinenlernmodul darauf trainiert werden, eine Streubreite eines Ausgabesignals durch ein weiteres Ausgabesignal zu reproduzieren. Die Unsicherheit eines jeweiligen ersten oder zweiten Ausgabesignals kann dann anhand des weiteren Ausgabesignals ermittelt werden. Zu diesem Training kann insbesondere eine loglikelihood-Fehlerfunktion der Streubreite als Kostenfunktion oder Belohnungsfunktion verwendet werden. Eine solche loglikelihood-Fehlerfunktion wird häufig auch als logarithmische Plausibilitätsfunktion bezeichnet. Mittels der loglikelihood-Fehlerfunktion kann ein Abstand des weiteren Ausgabesignals von der Streubreite des Ausgabesignals abgeschätzt werden. Damit können zu trainierende Parameter, z.B. neuronale Gewichte des Maschinenlernmoduls dahingehend optimiert werden, dass dieser Abstand minimiert oder zumindest verringert wird.

Weiterhin kann das Maschinenlernmodul ein künstliches neuronales Netz umfassten, bei dem Aktivierungsstärken verschiedener Ausgabeneuronen des künstlichen neuronalen Netzes mit einem vorgegebenen Muster von Aktivierungsstärken verglichen werden. Das Alarmsignal kann dann abhängig von einem Ergebnis des Vergleichs ausgegeben werden. Bei dem vorgegebenen Muster von Aktivierungsstärken kann insbesondere berücksichtigt werden, dass manche Ausgabeklassen des Maschinenlernmoduls schwieriger zu unterscheiden sind als andere Ausgabeklassen. So ist beispielsweise in analogem Sinn ein Bild eines Apfels in der Regel schwieriger von einem Bild einer Birne zu unterscheiden als von einem Bild eines Flugzeugs. Es ist also zu erwarten, dass die Aktivierungsstärken von schwieriger zu unterscheidenden Ausgabeklassen in der Regel näher beieinander liegen als die Aktivierungsstärken von leichter zu unterscheidenden Ausgabeklassen. In diesem Sinne können nahe beieinander liegende Aktvierungsstärken bei schwieriger zu unterscheidenden Ausgabeklassen als plausibel gewertet werden, während nahe beieinander liegende Aktivierungsstärken bei leichter zu unterscheidenden Ausgabeklassen als unplausibel gewertet werden können. Entsprechend können plausible bzw. unplausible Muster von Aktivierungsstärken vorgegeben und gespeichert werden, die schwieriger bzw. leichter zu unterscheidenden Ausgabeklassen zugeordnet sind. Damit kann das Alarmsignal insbesondere dadurch ausgelöst werden, dass durch das Prüfmodul ein oder mehrere unplausible Muster von Aktivierungsstärken detektiert werden.

Nach einer weiteren vorteilhaften Ausführungsform der Erfindung kann das Maschinenlernmodul und das Prüfmodul in einem Softwarecontainer, insbesondere in einem schlüssel- oder signaturgeschützten Softwarecontainer gekapselt werden. Auf diese Weise kann in vielen Fällen verhindert oder zumindest erschwert werden, dass das Maschinenlernmodul ohne das Prüfmodul verwendet wird. Zu diesem Zweck kann der Softwarecontainer vorzugsweise so ausgestaltet sein, dass das Maschinenlernmodul oder das Prüfmodul bei einer Auftrennung des Softwarecontainers ihre Funktion verlieren.

Ein Ausführungsbeispiel der Erfindung wird nachfolgend anhand der Zeichnung näher erläutert. Dabei veranschaulichen jeweils in schematischer Darstellung

Figur 1      eine Steuerung einer Maschine mittels eines Maschinenlernmoduls,

Figur 2      ein erfindungsgemäßes Diebstahlmeldesystem für ein Maschinenlernmodul und

Figur 3      einen Betrieb eines erfindungsgemäß geschützten Maschinelernmoduls.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

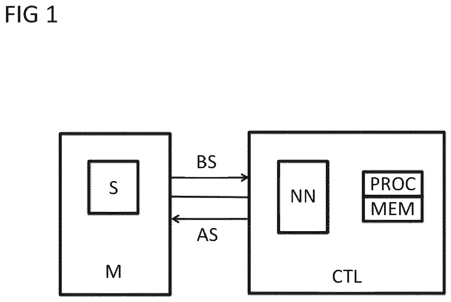

Figur 1 veranschaulicht eine Steuerung einer Maschine M mittels eines trainierten Maschinenlernmoduls NN in schematischer Darstellung. Die Maschine M kann hierbei insbesondere ein Roboter, ein Motor, eine Werkzeugmaschine, eine Fertigungsanlage, eine Energieversorgungseinrichtung, eine Gasturbine, eine Windturbine, eine Dampfturbine, eine Fräsmaschine, ein Kraftfahrzeug sein oder eine solche Maschine umfassen.

Für das vorliegende Ausführungsbeispiel sei angenommen, dass die Maschine M ein Fertigungsroboter ist.

Die Maschine M wird durch eine an diese gekoppelte Maschinensteuerung CTL gesteuert. Letztere ist in Figur 1 extern zur Maschine M dargestellt. Alternativ dazu kann die Maschinensteuerung CTL auch ganz oder teilweise in die Maschine M integriert sein. Die Maschinensteuerung CTL verfügt über einen oder mehrere Prozessoren PROC zum Ausführen der erfindungsgemäßen Verfahrensschritte sowie über einen oder mehrere Speicher MEM zum Speichern von zu verarbeitenden Daten.

Die Maschine M weist eine Sensorik S auf, durch die fortlaufend Betriebsparameter der Maschine M sowie andere Messwerte gemessen werden. Die von der Sensorik S ermittelten Messwerte werden zusammen mit anderen Betriebsdaten der Maschine M in Form von Betriebssignalen BS von der Maschine M zur Maschinensteuerung CTL übermittelt.

Die Betriebssignale BS umfassen insbesondere Sensordaten und/oder Messwerte der Sensorik S, Steuersignale der Maschine M und/oder Zustandssignale der Maschine M. Die Zustandssignale spezifizieren hierbei jeweils einen Betriebszustand der Maschine M oder von einer oder mehreren ihrer Komponenten, vorzugsweise im Zeitverlauf.

Insbesondere können durch die Betriebssignale BS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Betriebssignale BS jeweils durch einen oder mehrere numerische Datenvektoren dargestellt und in dieser Form zur Maschinensteuerung CTL übermittelt.

Die Maschinensteuerung CTL verfügt weiter über ein trainiertes Maschinenlernmodul NN zum Steuern der Maschine M. Das Maschinenlernmodul NN ist darauf trainiert, anhand eines eingespeisten Eingabesignals ein Ausgabesignal auszugeben, mittels dessen die Maschine M in optimierter Weise gesteuert werden kann. Zum Training eines solchen Maschinenlernmoduls NN steht eine Vielzahl effizienter Verfahren des maschinellen Lernens zur Verfügung, insbesondere Verfahren des bestärkenden Lernens, das häufig auch als Reinforcement-Learning bezeichnet wird. Auf das Training des Maschinenlernmoduls NN wird unten noch näher eingegangen. Das Maschinenlernmodul NN kann insbesondere als künstliches neuronales Netz implementiert werden.

Alternativ oder zusätzlich kann das Maschinenlernmodul NN ein rekurrentes neuronales Netz, ein faltendes neuronales Netz, ein Perzeptron, ein bayessches neuronales Netz, einen Autoencoder, einen variationalen Autoencoder, einen Gaußprozess, eine Deep-Learning-Architektur, eine Support-Vektor-Maschine, ein datengetriebenes Regressionsmodell, einen k-nächste-Nachbarn-Klassifikator, ein physikalisches Modell und/oder einen Entscheidungsbaum umfassen.

Im vorliegenden Ausführungsbeispiel werden zum Steuern der Maschine M die Betriebssignale BS als Eingabesignale in eine Eingabeschicht des trainierten Maschinenlernmoduls NN eingespeist. Aus den Betriebssignalen BS werden durch das trainierte Maschinenlernmodul NN Ausgabesignale AS zum Steuern der Maschine M, vorzugsweise in Form von numerischen Datenvektoren abgeleitet. Die Ausgabesignale AS oder daraus abgeleitete Signale werden dann als Steuersignale zur Maschine M übermittelt, um diese in optimierter Weise zu steuern.

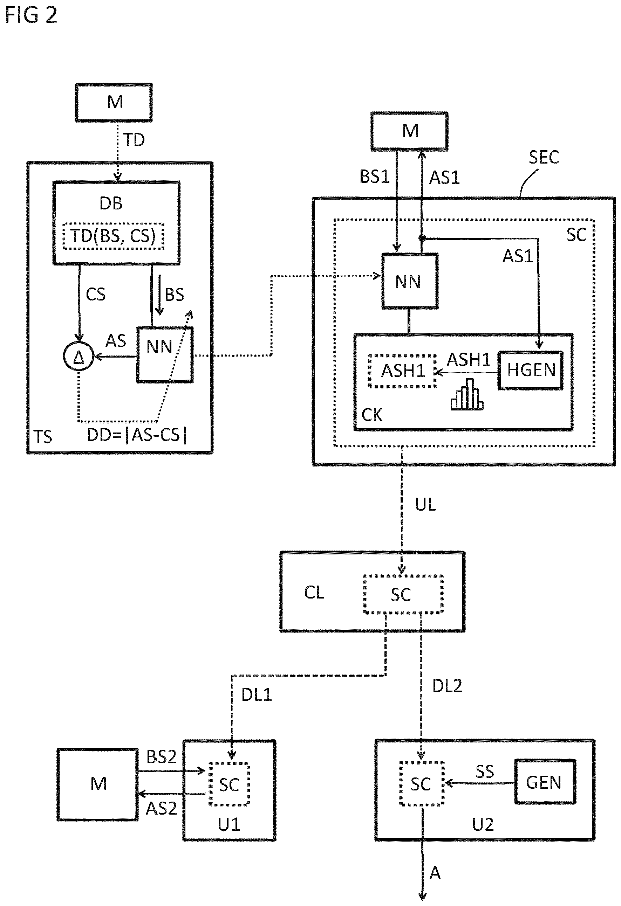

Figur 2 veranschaulicht ein erfindungsgemäßes Diebstahlmeldesystem für ein Maschinenlernmodul NN zum Steuern der Maschine M. Das Maschinenlernmodul NN kann insbesondere wie in Zusammenhang mit Figur 1 beschrieben implementiert sein und verwendet werden.

Das Maschinenlernmodul NN wird zunächst in einem Trainingssystem TS darauf trainiert, ein Ausgabesignal AS auszugeben, mittels dessen die Maschine M in optimierter Weise gesteuert werden kann. Das Training wird anhand einer großen Menge von Trainingsdaten TD ausgeführt, die einer Datenbank DB entnommen werden.

Im vorliegenden Ausführungsbeispiel enthalten die Trainingsdaten TD Paare aus jeweils einem Betriebssignal BS der Maschine M und einem zugeordneten Steuersignal CS der Maschine M, die vorzugsweise jeweils durch numerische Datenvektoren dargestellt werden. Ein jeweiliges Steuersignal CS stellt dabei dasjenige Steuersignal dar, durch das die Maschine M bei Vorliegen des zugeordneten Betriebssignals BS in optimierter Weise gesteuert wird. Die Trainingsdaten TD können beispielsweise aus einem Betrieb der Maschine M, einem Betrieb einer dazu ähnlichen Maschine oder aus einer Simulation der Maschine M ermittelt werden.

Unter einem Training sei hierbei allgemein eine Optimierung einer Abbildung eines Eingabesignals eines Maschinenlernmoduls auf dessen Ausgabesignal verstanden. Diese Abbildung wird nach vorgegebenen gelernten und/oder zu lernenden Kriterien während einer Trainingsphase optimiert. Als Kriterium können insbesondere bei Steuermodellen ein Erfolg einer Steueraktion oder bei Prädiktionsmodellen ein Prädiktionsfehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Zum Training des Maschinenlernmoduls NN werden die in den Trainingsdaten TD enthaltenen Betriebssignale BS dem Maschinenlernmodul NN als Eingabesignale zugeführt. Im Zuge des Trainings werden neuronale Gewichte oder andere Parameter des Maschinenlernmoduls NN vorzugsweise durch eines der oben erwähnten Optimierungsverfahren derart eingestellt, dass die Maschine M mittels der vom Maschinenlernmodul NN aus den Eingabesignalen BS abgeleiteten Ausgabesignale AS in optimierter Weise gesteuert wird. Zu diesem Zweck werden im vorliegenden Ausführungsbeispiel die Ausgabesignale AS mit den zugehörigen, in den Trainingsdaten TD enthaltenen Steuersignalen CS verglichen und ein jeweiliger Abstand DD zwischen diesen Signalen ermittelt. Als Abstand DD kann beispielsweise ein euklidischer Abstand zwischen den darstellenden Datenvektoren oder eine andere Norm von deren Differenz ermittelt werden, z.B. gemäß $DD = |AS - CS|$.

Die so ermittelten Abstände DD werden, wie in Figur 2 durch einen punktierten Pfeil angedeutet, zum Maschinenlernmodul NN zurückgeführt. Dessen neuronale Gewichte werden dann so eingestellt, dass der Abstand DD zumindest im statistischen Mittel minimiert wird. Durch das Training wird das Maschinenlernmodul NN dazu befähigt, die Maschine M anhand eines Betriebssignals BS durch das aus dem Betriebssignal abgeleitete Ausgabesignal AS in optimierter Weise zu steuern.

Alternativ oder zusätzlich kann zum Training des Maschinenlernmoduls NN auch ein Verfahren des bestärkenden Lernens verwendet werden. Hierbei kann die Maschine M oder eine Simulation der Maschine M durch die Ausgabesignale AS gesteuert werden, wobei fortlaufend eine Performanz der Maschine M gemessen oder anderweitig ermittelt wird. Als Performanz können z.B. eine Leistung, ein Wirkungsgrad, ein Durchsatz, eine Ausführungsgeschwindigkeit, eine Fehlerrate oder andere für den Betrieb der Maschine M relevante Parameter ermittelt werden. Die neuronalen Gewichte des Maschinenlernmoduls NN werden dann so eingestellt, dass die ermittelte Performanz optimiert wird.

Das vorstehend beschriebene Training des Maschinenlernmoduls NN kann auch außerhalb des Diebstahlmeldesystems von einem Drittanbieter durchgeführt werden. Die Erfindung erlaubt es mithin, auch fertig trainierte Maschinenlernmodule zu schützen.

Das trainierte Maschinenlernmodul NN wird nach dem Training vom Trainingssystem TS zu einem Sicherungssystem SEC übermittelt. Das Sicherungssystem SEC dient dem Zweck, das trainierte Maschinenlernmodul NN gegen unkontrollierte Verbreitung und insbesondere gegen Modellextraktion zu schützen. Zu diesem Zweck wird durch das Sicherungssystem SEC eine erste statistische Verteilung von ersten Ausgabesignalen AS1 des trainierten Maschinenlernmoduls NN in Form eines ersten Histogramms ASH1 der ersten Ausgabesignale AS1 ermittelt.

Im vorliegenden Ausführungsbeispiel werden die ersten Ausgabesignale AS1 erfasst, während die Maschine M mittels des trainierten Maschinenlernmoduls NN gesteuert wird. Zum Steuern der Maschine M werden in das trainierte Maschinenlernmodul NN - wie oben schon erwähnt - erste Betriebssignale BS1 der Maschine M als Eingabesignale eingespeist. Aus den ersten Betriebssignalen BS1 werden durch das trainierte Maschinenlernmodul NN die ersten Ausgabesignale AS1 abgeleitet, die dann zum Steuern der Maschine M verwendet werden.

Alternativ oder zusätzlich können die ersten Ausgabesignale AS1 zumindest teilweise auch schon beim Training des Maschinenlernmoduls NN erfasst werden. Insbesondere können die ersten Ausgabesignale AS1 zumindest teilweise aus den in den Trainingsdaten TD enthaltenen und durch die Ausgabesignale des Maschinenlernmoduls NN zu reproduzierenden Steuersignalen CS abgeleitet werden.

Die ersten Ausgabesignale AS1 werden durch das Sicherungssystem SEC erfasst und in ein Prüfmodul CK eingespeist. Das Prüfmodul CK verfügt über einen Histogrammgenerator HGEN, der zum Ermitteln einer ersten statistischen Verteilung der eingespeisten ersten Ausgabesignale AS1 dient. Die erste statistische Verteilung wird dabei in Form eines ersten Histogramms ASH1 über Ausgabeklassen der Ausgabesignale AS1 generiert.

Zum Ermitteln des ersten Histogramms ASH1 werden die Ausgabesignale des Maschinenlernmoduls NN vorab in Ausgabeklassen oder Ausgabebereiche eingeteilt. Für jede Ausgabeklasse bzw. jeden Ausgabebereich werden dann die in die jeweilige Ausgabeklasse bzw. in den jeweiligen Ausgabebereich fallenden ersten Ausgabesignale AS1 durch den Histogrammgenerator HGEN gezählt. Vorteilhafterweise werden die resultierenden Anzahlen jeweils durch eine Gesamtanzahl der ersten Ausgabesignale AS1 dividiert, um das erste Histogramm ASH1 zu normieren. Das normierte erste Histogramm ASH1 wird vorzugsweise durch einen Vektor dargestellt, dessen Vektorelemente den zu unterscheidenden Klassen bzw. Bereichen zugeordnet sind.

Anhand des ermittelten ersten Histogramms ASH1 über die ersten Ausgabesignale AS1 soll bei einer späteren Verwendung des Maschinenlernmoduls NN geprüft werden, ob die dann vom Maschinenlernmodul NN ausgegebenen Ausgabesignale eine ähnliche statistische Verteilung aufweisen wie die ersten Ausgabesignale AS1. Eine ähnliche Verteilung spricht für einen bestimmungsgemäßen Betrieb des Maschinenlernmoduls NN zum Steuern der Maschine M. Dagegen ist eine signifikante Abweichung von der ersten statistischen Verteilung ein Hinweis auf eine systematische oder zufallsgesteuerte Abtastung des Maschinenlernmoduls NN und damit ein Indiz für den Versuch einer Modellextraktion.

Das generierte und normierte erste Histogramm ASH1 wird durch den Histogrammgenerator HGEN im Prüfmodul CK gespeichert.

Das Prüfmodul CK wird dann durch das Sicherungssystem SEC dem trainierten Maschinenlernmodul NN hinzugefügt. Dabei werden das trainierte Maschinelernmodul NN und das Prüfmodul CK miteinander über eine geschützte Schnittstelle gekoppelt. Um die Schnittstelle gegen unberechtigten Zugriff zu schützen, werden das trainierte Maschinenlernmodul NN und das Prüfmodul CK durch das Sicherungssystem SEC in einem Softwarecontainer SC vorzugsweise schlüssel- und/oder signaturgeschützt gekapselt. Die Schnittstelle kann dabei z.B. durch Verschlüsselung oder Obfuskation geschützt werden. Der Softwarecontainer SC ist vorzugsweise so ausgestaltet, dass das Maschinenlernmodul NN, und/oder das Prüfmodul CK bei einer Auftrennung des Softwarecontainers SC ihre Funktionen verlieren.

Der so geschützte Softwarecontainer SC kann anschließend zur Benutzung bereitgestellt werden. Zu diesem Zweck wird der Softwarecontainer SC vom Sicherheitssystem SEC durch einen Upload UL in eine Cloud CL, insbesondere in einen App-Store der Cloud CL übertragen.

Aus der Cloud CL oder ihrem App-Store wird der Softwarecontainer SC einerseits durch einen ersten Download DL1 zu einem System U1 eines ersten Anwenders und andererseits durch einen zweiten Download DL2 zu einem System U2 eines zweiten Anwenders heruntergeladen.

Für das vorliegende Ausführungsbeispiel sei angenommen, dass der erste Anwender mit Hilfe des geschützten Maschinenlernmoduls NN auf seinem System U1 die Maschine M bestimmungsgemäß steuern möchte. Demgegenüber möchte der zweite Anwender auf seinem System U2 an dem trainierten Maschinenlernmodul NN eine unberechtigte Modellextraktion vornehmen.

Durch das System U1 werden zur Steuerung der Maschine M zweite Betriebssignale BS2 der Maschine M empfangen und in den Softwarecontainer SC eingespeist. Im Softwarecontainer SC werden die zweiten Betriebssignale BS2 dem trainierten Maschinenlernmodul NN als Eingabesignale zugeführt, das daraus zweite Ausgabesignale AS2 zum Steuern der Maschine M ableitet.

Zur Überprüfung eines bestimmungsgemäßen Betriebs werden die zweiten Ausgabesignale AS2 dann von dem im Softwarecontainer SC enthaltenen Prüfmodul CK dahingehend geprüft, ob sie eine ähnliche statistische Verteilung aufweisen wie die ersten Ausgabesignale AS1. Ein Ablauf der Prüfung wird unten näher erläutert.

Insofern im vorliegenden Ausführungsbeispiel das Maschinelernmodul NN im System U1 zum Steuern der Maschine M verwendet wird, ist zu erwarten, dass die zweiten Ausgabesignale AS2 eine ähnliche statistische Verteilung aufweisen, wie die ersten Ausgabesignale AS1. Dementsprechend werden die zweiten Ausgabesignale AS2 durch das Prüfmodul CK im vorliegenden Fall als authentisch bewertet, was für einen bestimmungsgemäßen Normalbetrieb des trainierten Maschinenlernmoduls NN spricht. Infolgedessen kann die Maschine M durch die zweiten Ausgabesignale AS2 des trainierten Maschinenlernmoduls NN wie vom ersten Anwender gewünscht gesteuert werden.

Anders als im Fall des ersten Anwenders werden im System U2 des zweiten Anwenders durch einen Generator GEN synthetische Abtastsignale SS als Eingabesignale für das trainierte Maschinenlernmodul NN generiert, um das trainierte Maschinelernmodul NN und sein Verhalten systematisch abzutasten.

Die dem Softwarecontainer SC zugeführten Abtastsignale SS werden dem trainierten Maschinenlernmodul NN als Eingabesignale zugeführt, das daraus zweite Ausgabesignale AS2 ableitet. Die zweiten Ausgabesignale AS2 werden dann - wie oben schon erwähnt - von dem im Softwarecontainer SC enthaltenen Prüfmodul CK dahingehend geprüft, ob sie eine ähnliche statistische Verteilung aufweisen wie die ersten Ausgabesignale AS1.

Insofern derartige Abtastsignale SS sich in der Regel wesentlich von realen Betriebssignalen der Maschine M unterscheiden, kann davon ausgegangen werden, dass die aus den Abtastsignalen SS abgeleiteten zweiten Ausgabesignale AS2 eine signifikant andere statistische Verteilung aufweisen als die ersten Ausgabesignale AS1. Diese Abweichung wird im vorliegenden Fall durch das Prüfmodul CK erkannt und als Hinweis auf eine unberechtigte Modellextraktion bewertet.

Infolgedessen wird durch das Prüfmodul CK ein Alarmsignal A mittels eines Alarmgebers ausgegeben. Das Alarmsignal A kann beispielsweise an einen Ersteller des Maschinenlernmoduls NN, an das Trainingssystem TS und/oder an das Sicherungssystem SEC übermittelt werden, um die betreffende Stelle über den Versuch einer Modellextraktion zu informieren.

Alternativ oder zusätzlich zur Ausgabe des Alarmsignals A können beim Erkennen eines Extraktionsversuchs vorgegebene Funktionen des trainierten Maschinelernmoduls NN eingeschränkt oder unterdrückt werden.

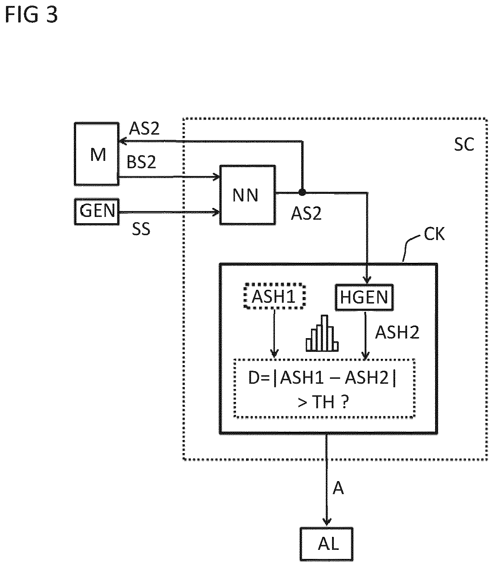

Figur 3 veranschaulicht einen Betrieb eines erfindungsgemäß geschützten Maschinenlernmoduls NN. Das trainierte Maschinelernmodul NN ist, wie oben schon erwähnt, zusammen mit dem Prüfmodul CK im Softwarecontainer SC gekapselt. Das Maschinenlernmodul NN ist dabei mit dem Prüfmodul CK über eine gegen unberechtigten Zugriff geschützte Schnittstelle gekoppelt.

Im Betrieb werden dem Softwarecontainer SC gemäß dem vorliegenden Ausführungsbeispiel entweder zweite Betriebssignale BS2 oder synthetische Abtastsignale SS als Eingabesignale zugeführt. Wie oben schon erwähnt, sei hierbei angenommen, dass die zweiten Betriebssignale BS2 von der Maschine M im Rahmen einer bestimmungsgemäßen Verwendung des Maschinenlernmoduls NN zugeführt werden, während die Abtastsignale SS im Falle einer versuchten Modellextraktion von einem Generator GEN generiert werden.

Die Eingabesignale BS2 bzw. SS werden in das Maschinenlernmodul NN eingespeist, das daraus zweite Ausgabesignale AS2 ableitet. Die zweiten Ausgabesignale AS2 werden dem Histogrammgenerator HGEN des Prüfmoduls CK zugeführt, das daraus eine zweite statistische Verteilung der zweiten Ausgabesignale AS2 ermittelt. Die zweite statistische Verteilung wird dabei durch ein normiertes zweites Histogramm ASH2 über Ausgabeklassen der zweiten Ausgabesignale AS2 dargestellt.

Anhand des ermittelten zweiten Histogramms ASH2 und des gespeicherten ersten Histogramms ASH1 ermittelt das Prüfmodul CK eine Abweichung D zwischen der ersten und der zweiten statistischen Verteilung als Abweichung zwischen dem ersten Histogramm ASH1 und zweiten Histogramm ASH2. Die Abweichung D kann auf vielfältige Weise ermittelt werden, z.B. gemäß

$$\mathrm{D} \;=\; \textstyle\sum_d |ASH1(d) - ASH2(d)|,$$

$$\mathrm{D} \;=\; \sum_d \big(ASH1(d) - ASH2(d)\big)^2$$

oder

$$D = \sum_d |K1(d) - K2(d)|,$$

wobei d die Ausgabeklassen des Maschinenlernmoduls NN indiziert, ASH1(d) und ASH2(d) durch d indizierte Vektorelemente von Vektoren der normierten Histogramme ASH1 und ASH2 bezeichnet und die Vektoren K1 und K2 gegeben sind durch

$$K1(i) = \sum_{d<i} ASH1(d)$$

$$K2(i) = \sum_{d<i} ASH2(d).$$

Alternativ oder zusätzlich kann als Abweichung D auch eine sogenannte Kullback-Leibler-Divergenz zwischen den normierten Histogrammen ASH1 und ASH2 ermittelt werden, vorzugsweise gemäß

$$D = D(ASH2\|ASH1) = \sum_d ASH2(d) * \log\left(\frac{ASH2(d)}{ASH1(d)}\right),$$

Eine Kullback-Leibler-Divergenz wird häufig auch als relative Entropie bezeichnet.

Die ermittelte Abweichung D wird durch das Prüfmodul CK mit einem vorgegebenen Schwellwert TH verglichen. Ein Überschreiten des Schwellwerts TH wird dabei als Hinweis auf eine unberechtigte Modellextraktion gewertet. Andernfalls wird ein bestimmungsgemäßer Normalbetrieb diagnostiziert.

Wie oben bereits erwähnt, ist zu erwarten, dass bei Einspeisung von realen Betriebssignalen BS2 der Maschine M die resultierenden zweiten Ausgabesignale AS2 eine ähnliche statistische Verteilung aufweisen, wie die ersten Ausgabesignale AS1. Eine verhältnismäßig geringe Abweichung D ist somit als signifikantes Indiz für einen bestimmungsgemäßen Normalbetrieb zu werten. In diesem Fall können die zweiten Ausgabesignale AS2 zum Steuern der Maschine M ausgegeben werden. Darüber hinaus kann in diesem Fall das zweite Histogramm ASH2 dazu genutzt werden, das erste Histogramm ASH1 im Prüfmodul CK zu aktualisieren.

Im Unterschied dazu kann bei Einspeisung der Abtastsignale SS davon ausgegangen werden, dass die zweite statistische Verteilung bzw. das zweite Histogramm ASH2 signifikant von der ersten statistischen Verteilung bzw. dem ersten Histogramm ASH1 abweicht. Eine verhältnismäßig große Abweichung D ist somit als Indiz für den Versuch einer Modellextraktion zu werten. In diesem Fall wird durch das Prüfmodul CK ein Alarmsignal A an einen Alarmgeber AL bei einem Ersteller des Maschinenlernmoduls NN, im Trainingssystem TS und/oder im Sicherungssystem SEC ausgegeben.

Als alternatives oder weiteres Maß für eine statistische Abweichung der zweiten Ausgabesignale AS2 von den ersten Ausgabesignalen AS1 können jeweilige Unsicherheiten der ersten Ausgabesignale AS1 und der zweiten Ausgabesignale AS2 berücksichtigt werden.

Die Unsicherheit eines jeweiligen Ausgabesignals AS1 bzw. AS2 kann dabei insbesondere mittels einer jeweiligen Aktivierungsstärke eines jeweiligen Ausgabeneurons des Maschinenlernmoduls NN quantifiziert werden. Alternativ oder zusätzlich kann das Maschinenlernmodul NN auch darauf trainiert werden, eine die Unsicherheit quantifizierende Streubreite eines jeweiligen Ausgabesignals AS1 durch ein weiteres Ausgabesignal zu reproduzieren.

Anhand der quantifizierten Unsicherheiten können die erste und die zweite statistische Verteilung als statistische Verteilungen der jeweiligen Unsicherheiten der ersten Ausgabesignale AS1 bzw. der zweiten Ausgabesignale AS2 ermittelt werden.

Alternativ dazu kann das Prüfmodul CK zusätzlich zur ersten statistischen Verteilung eine dritte statistische Verteilung der Unsicherheiten der Ausgabesignale AS1, vorzugsweise in Form eines Histogramms ermitteln und im Prüfmodul CK speichern. Entsprechend kann durch das Prüfmodul CK zusätzlich zur zweiten statistischen Verteilung eine vierte statistische Verteilung der Unsicherheiten der Ausgabesignale AS2, vorzugsweise in Form eines Histogramms ermittelt und mit der gespeicherten dritten statistischen Verteilung verglichen werden.

**Patentansprüche**

1. Computerimplementiertes Verfahren zur Diebstahlerkennung eines anhand von Trainingsdaten (TD) für ein Steuern einer Maschine (M) trainierten oder zu trainierenden Maschinenlernmoduls (NN), wobei

a) beim Steuern der Maschine (NN) vom Maschinenlernmodul (NN) ausgegebene erste Ausgabesignale (AS1) erfasst werden, und/oder aus den Trainingsdaten (TD) abgeleitete vom Maschinenlernmodul (NN) zu reproduzierende erste Ausgabesignale (AS1) erfasst werden,

b) eine erste statistische Verteilung (ASH1) der erfassten ersten Ausgabesignale (AS1) ermittelt und in einem Prüfmodul (CK) gespeichert wird,

c) das Maschinenlernmodul (NN) um das Prüfmodul (CK) erweitert wird,

d) das erweiterte Maschinenlernmodul (NN) zur Benutzung bereitgestellt wird,

e) eine Vielzahl von Eingabesignalen (BS2, SS) in das bereitgestellte Maschinenlernmodul (NN) eingespeist wird,

f) durch das Prüfmodul (CK)

   - eine zweite statistische Verteilung (ASH2) von durch das bereitgestellte Maschinenlernmodul (NN) aus den Eingabesignalen (BS2, SS) abgeleiteten, zweiten Ausgabesignalen (AS2) ermittelt wird,
   - eine Abweichung (D) zwischen der ersten statistischen Verteilung (ASH1) und der zweiten statistischen Verteilung (ASH2) ermittelt wird, und

g) abhängig von der ermittelten Abweichung (D) ein Alarmsignal (A) ausgegeben wird.

2. Verfahren nach Anspruch 1, **dadurch gekennzeichnet,**
   **dass** durch das Prüfmodul (CK) abhängig von der ermittelten Abweichung (D) eine Funktion des bereitgestellten Maschinenlernmoduls (NN) eingeschränkt, unterdrückt oder freigeschaltet wird.

3. Verfahren nach einem der vorhergehenden Ansprüche, **dadurch gekennzeichnet,**
   **dass** abhängig von der ermittelten Abweichung (D) die erste statistische Verteilung (ASH1) anhand der zweiten statistischen Verteilung (ASH2) aktualisiert wird.

4. Verfahren nach einem der vorhergehenden Ansprüche, **dadurch gekennzeichnet,**

   **dass** die erste statistische Verteilung durch ein erstes Ausgabesignal-Histogramm (ASH1) und die zweite statistische Verteilung durch ein zweites Ausgabesignal-Histogramm (ASH2) dargestellt werden, und
   **dass** als Abweichung (D) zwischen der ersten und der zweiten statistischen Verteilung eine Abweichung zwischen dem ersten und dem zweiten Ausgabesignal-Histogramm (ASH1, ASH2) ermittelt wird.

5. Verfahren nach einem der vorhergehenden Ansprüche, **dadurch gekennzeichnet,**

   **dass** eine Unsicherheit eines jeweiligen ersten Ausgabesignals (AS1) erfasst wird,
   **dass** eine dritte statistische Verteilung der erfassten Unsicherheiten ermittelt und im Prüfmodul (CK) gespeichert wird, dass durch das Prüfmodul (CK) eine vierte statistische Verteilung von jeweiligen Unsicherheiten der zweiten Ausgabesignale (AS2) ermittelt wird, und
   **dass** das Alarmsignal (A) abhängig von einer Abweichung (D) zwischen der dritten statistischen Verteilung und der vierten statistischen Verteilung ausgegeben wird.

6. Verfahren nach Anspruch 5, **dadurch gekennzeichnet,**

   **dass** das Maschinenlernmodul (NN) ein künstliches neuronales Netz umfasst,
   **dass** eine jeweilige Aktivierungsstärke eines jeweiligen Ausgabeneurons des künstlichen neuronalen Netzes erfasst wird, und
   **dass** die Unsicherheit eines jeweiligen ersten oder zweiten Ausgabesignals (AS1, AS2) anhand der erfassten Aktivierungsstärken ermittelt wird.

7. Verfahren nach Anspruch 5 oder 6, **dadurch gekennzeichnet, dass** das Maschinenlernmodul (NN) darauf trainiert wird, eine Streubreite eines Ausgabesignals (AS1, AS2) durch ein weiteres Ausgabesignal zu reproduzieren, und dass die Unsicherheit eines jeweiligen ersten oder zweiten Ausgabesignals (AS1, AS2) anhand des weiteren Ausgabesignals ermittelt wird.

8. Verfahren nach einem der vorhergehenden Ansprüche, **dadurch gekennzeichnet,**

   **dass** das Maschinenlernmodul (NN) ein künstliches neuronales Netz umfasst,

> **dass** Aktivierungsstärken verschiedener Ausgabeneuronen des künstlichen neuronalen Netzes mit einem vorgegebenen Muster von Aktivierungsstärken verglichen werden, und
> **dass** das Alarmsignal (A) abhängig von einem Ergebnis des Vergleichs ausgegeben wird.

9. Verfahren nach einem der vorhergehenden Ansprüche, **dadurch gekennzeichnet,**
   **dass** das Maschinenlernmodul (NN) und das Prüfmodul (CK) in einem Softwarecontainer (SC) gekapselt werden.

10. Diebstahlmeldesystem für ein Maschinenlernmodul (NN), eingerichtet zum Ausführen eines Verfahrens nach einem der vorhergehenden Ansprüche.

11. Computerprogrammprodukt umfassend Befehle, die bei der Ausführung durch einen Computer diesen veranlassen, ein Verfahren nach einem der Ansprüche 1 bis 9 auszuführen.

12. Computerlesbares Speichermedium mit einem Computerprogrammprodukt nach Anspruch 11.

FIG 1

## FIG 2

FIG 3

Europäisches
Patentamt

European
Patent Office

Office européen
des brevets

# EUROPÄISCHER RECHERCHENBERICHT

**Nummer der Anmeldung**

**EP 22 18 2235**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JUUTI MIKA ET AL: "PRADA: Protecting Against DNN Model Stealing Attacks", 2019 IEEE EUROPEAN SYMPOSIUM ON SECURITY AND PRIVACY (EUROS&P), IEEE, 17. Juni 2019 (2019-06-17), Seiten 512-527, XP033600710, DOI: 10.1109/EUROSP.2019.00044 [gefunden am 2019-08-19] * Zusammenfassung; Abbildung 5 * * Abschnitt V, V.A, V.C Algorithmus 3 * ----- | 1-12 | INV. G06N3/04 G06F21/14 G06F21/55 ADD. G05B9/02 G05B13/02 G05B19/406 |
| X | MANISH KESARWANI ET AL: "Model Extraction Warning in MLaaS Paradigm", 20181203; 20181203 - 20181207, 3. Dezember 2018 (2018-12-03), Seiten 371-380, XP058421558, DOI: 10.1145/3274694.3274740 ISBN: 978-1-4503-6569-7 * Zusammenfassung; Abbildung 1 * * Abschnitt 3, 4 * ----- | 1-12 | |

**RECHERCHIERTE SACHGEBIETE (IPC)**

G06N
G05B
G06F

Der vorliegende Recherchenbericht wurde für alle Patentansprüche erstellt

| Recherchenort | Abschlußdatum der Recherche | Prüfer |
|---|---|---|
| Den Haag | 24. November 2022 | Houtgast, Ernst |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)